# EUROPEAN PATENT APPLICATION

(11) **EP 2 596 876 A1**
(43) Date of publication of application: **29.05.2013**
(21) Application number: 11190514.7
(22) Date of filing: 24.11.2011
(51) Int. Cl.: B21C 23/14, B22F 3/20, B23B 51/06, B23P 15/32

(54) **Round tool blank and method and device for making the same**

(71) Applicant: Sandvik Intellectual Property AB, 811 81 Sandviken (SE)
(72) Inventor: Kakai, Isak, SE-802 67 GÄVLE (SE); Eriksson, Henrik, SE 747 94 Alunda (SE)
(74) Representative: Fröderberg, Anders Oskar

(57) **Abstract**

The present invention relates to a method and a device for manufacturing a blank for a round tool and to a blank (23) for a round tool, and eventually to a method for manufacturing a round tool and to a round tool (24) obtained. The device comprises a die (6) for extrusion and a sleeve arrangement comprising a sleeve (10), and an end member (14) for closing the sleeve (10) in one end. Extrusion through the die (6) continuously forms an extruded material (22) comprising chip flutes (4) and optionally internal coolant channels (3), which is received by the sleeve arrangement. The extruded material received by the sleeve arrangement is reworked and shaped to a shank portion (1) after the interior shape of the sleeve arrangement. A projection (15) of the end member (14) protruding into the sleeve (6) forms a bore (5) in the blank. When the shank portion is finished the end member (14) is released and moved forward as extrusion continues to form a fluted portion (2) to complete the blank. The material waste is minimal in this process and since the internal coolant channels (3) are formed simultaneously with the chip flutes in the fluted portion (2) there is no risk of deforming the internal coolant channels (3). Moreover, a bore (5) in the round tool (24) removes unnecessary material and provides improved design of internal coolant channels (3).

## Description

### Technical field

The present invention relates to a method and a device for manufacturing a blank for a round tool and to a blank for a round tool, and eventually to a method for manufacturing a round tool and to a round tool.

### Background

Round tool is a term used in the field of cutting tools and it refers to cutting tools for chip forming machining such as drills, end mills, thread drills, etc. In contrast to cutting inserts the round tools are typically elongated and made in one piece with a shank portion and a portion comprising one or more cutting edges. Normally the latter comprises chip flutes for efficient removal of chips during machining and hence this portion is herein referred to as fluted portion. Round tools are commonly made of cemented carbide or high speed steel, but they can also be made of ceramics or cermets.

Manufacturing of round tools is usually performed by powder metallurgy comprising pressing powder materials into blanks with a shape as close as practical to the final product shape, sintering and grinding to obtain the final product shape. In conventional manufacturing techniques this means that the blank is essentially a cylindrical body that requires substantial grinding to form basic geometry, chip flutes and cutting edges. This grinding is time-consuming and costly and it is desired to reduce the use of this.

In many round tools internal coolant channels are formed. This can be accomplished by isostatic pressing in a mould comprising twisting a wire made of wax or the like around a cylindrical core member, filling up the mould and pressing to form the blank, sintering and grinding to obtain the final product shape. Typically this manufacturing technique requires at least some machining of the pressed body in prior to sintering as well.

More modern manufacturing techniques, such as injection molding or extrusion, provide blanks with shapes closer to the final product shapes.

US 7,101,167 describes a method for manufacturing a round tool comprising extruding a powder mixture to a round tool blank with a shape very close to final product shape. This method enables forming of a shaft portion, chip flutes and optionally internal coolant channels in a continuous process. The powder mixture is extruded through a die to form a cylindrical outer surface of the extruded powder mixture followed by subjecting the cylindrical outer surface of the progressing extruded powder mixture to a flute-forming structure arranged in series downstream the die whereby chip flutes are formed along a first lengthwise section of the cylindrical outer surface to define a fluted portion of the blank. When a desired length of the fluted portion is obtained the flute-forming structure is displaced away from the cylindrical outer surface to terminate the chip flute formation and the extrusion through the die is continued until a second section with a cylindrical outer surface that defines a shaft portion of the round tool blank has been accomplished. Internal coolant channels may be formed in the die as well and by rotating the progressing powder mixture the internal coolant channels will follow the chip flutes. However, the flute formation may deform the internal coolant channel. Such deformation of the coolant channels may lead to rejection of the round tool blank formed.

US 7,296,497 describes a different approach comprising initially forming the chip flutes and subsequently forming the shank portion. This is accomplished by extruding a powder mixture through a die whereby the chip flutes are formed. Coolant channels are formed simultaneously as the chip flutes by filaments arranged in the die. The progressing extruded powder mixture thereafter enters a cylindrical sleeve connected to the die and eventually projects from a free end of the sleeve. The projecting part of the extruded powder mixture is cut off by a lid closing the free end of the sleeve. As the extrusion proceeds the progressing extruded powder mixture fills up the sleeve and the preformed chip flutes are filled up and the preformed coolant channels are deformed due to deformation of the extruded powder mixture within the sleeve. When the pressure in the sleeve has reached a certain level the lid is opened and the deformed portion is pushed out from the sleeve in a non-rotational manner due to friction against the walls of the sleeve. Due to the continued non-rotational progress within the sleeve the filaments finally becomes rectilinear within the sleeve and the deformed portion projecting out from the sleeve is cut off. The extrusion is then continued until desired length of the shank portion is obtained.

Yet providing a shape very close to the final product shape, the flute formation according to the above methods result in a substantial loss of powder material.

### Summary

One object of the invention is to reduce material waste in manufacturing of round tools. This object is accomplished by a blank for a round tool and a method and a device for manufacturing the same in accordance with the independent claims.

A blank for a round tool in accordance with the invention comprises a shank portion, a fluted portion and a bore extending into the shank portion coaxially with a longitudinal axis thereof. The blank may further comprise interior coolant channels. Preferably the blank has a shape close to the shape of the round tool to be formed. Hence, in the geometrical considerations with respect to the blank herein applies to a round tool formed from the blank as well, and vice versa. The transformation from blank to round tool involves at least sintering of the blank and optionally other post-processing such as drying, machining, grinding, polishing, coating, etc. The round tool is for metal cutting by chip forming machining and is made of materials suitable therefore such as cemented carbide, high speed steel, cermet or ceramics. The blank may have a different material composition, e.g. it may comprise additional constituents such as a binder and structure and phase may be changed in the sintering.

The bore extends at least partly into the shank portion, preferably in a longitudinal centre axis of the blank along more than half the length of the shank portion, even more preferably along more than 75% of the shank portion.

In one embodiment of the invention the bore overlaps with the chip flutes of the fluted portion, i.e. the bore extends partly into the fluted portion.

The bore saves material in manufacturing of the round tool, at least using the process described in the following. In addition post-processing of the blank may be improved. Normally the shank portion is substantially thicker than the fluted portion which gives different properties in the different parts of the blank during heat treatment, such as drying and sintering. This difference may cause bending of the blank, porosity and other problems. With a bore extending at least into in the shank portion the thickness of the blank in the shank portion and the fluted portion can be essentially the same, which give equal conditions in all parts of the round tool during heat treatment. A bore in the tool also lighten the tool, which is of importance in manufacturing, transport and handling.

In one embodiment of the invention the blank comprises one or more internal coolant channels extending at least in the fluted portion along the longitudinal centre axis of the blank. The internal coolant channels are connected to the bore, which provides a common inlet to the coolant channels. In one variant of this embodiment the total cross-sectional area of the internal coolant channels is smaller than a cross-sectional area of the bore.

Internal coolant channels are known as such and the placement and design thereof as well. Typically the internal coolant channels follow the helical chip flutes, and hence the internal coolant channels extend along the longitudinal centre axis in a twisted manner. However, when having thin internal coolant channels extending through the whole round tool in accordance with conventional technology, the flow resistance in the internal coolant channels may be high, in particular for long round tools. By having a wide bore in the shank portion connected to the internal coolant channels in the fluted portion in accordance with the present invention the flow resistance can be significantly reduced. Hence, thanks to the present invention the flow properties for coolant flow through the round tool is improved.

A device for manufacturing of a blank for a round tool comprising a shank portion and a fluted portion in accordance with one embodiment of the invention comprises a die for extrusion comprising an interior flute-forming surface between an inlet and an outlet of the die, a sleeve comprising an interior shank-forming surface between a first end and a second end of the sleeve and an end member having a closed position for closing the second end of the sleeve and having a released position where the end member is separated from the sleeve. The end member comprises a projection arranged to protrude into the sleeve when the sleeve is closed by the end member.

The die is adapted to be connected to the feeding means for feeding feed material into the inlet of the die. The sleeve is adapted to be connected to the sleeve with the first end facing the outlet of the die and being aligned with an extrusion direction of the die for receiving extruded material from the die. The end member is arranged for being movable in the extrusion direction, away from the sleeve, when released from the closed position. The die, sleeve and end member are arranged for being assembled together with feeding means. In operation the end member is in a closed position closing the sleeve in the second end, together forming a sleeve arrangement.

Operation of the device comprises extrusion of feed material through the die and into the sleeve arrangement, whereby the die is arranged to shape the fluted portion and the sleeve arrangement is arranged to shape the shank portion. The manufacturing is preferably performed using a continuous extrusion process. In principle the extrusion through the die produces an extruded material with chip flutes in a circumferential surface thereof that progresses in an extrusion direction, and optionally with internal coolant channels therein. However, initially the extruded material is reworked in a sleeve arrangement to the shape of the shank portion and when the shank portion is finished the extruded material is allowed to stay in the same shape as defined by the extrusion process in the die to form the fluted portion. Finally, when a desired length of the fluted portion is obtained the extruded material is cut off to create the blank.

In this process the feed material is extruded through the die and extruded material is received by a cavity formed by sleeve arrangement to fill the cavity and to form the shank portion from the extruded material. Hence the outer circumferential part and the inner bore of the shank portion can be simultaneously formed during continuous extrusion. When the extruded material enters the sleeve and starts filling up the sleeve, a pressure will eventually start building up against the end member. Thus the device is adapted to hold the end member in a closed position until the shank portion has been formed. Holding means for holding the end member in the closed position may include additional parts but may also be part of the sleeve. When the cavity is filled up the end member is released from the sleeve and during continued extrusion through the die the shank portion formed can move freely along the extrusion direction, away from the sleeve, together with the end member while forming the fluted portion.

In one embodiment of the invention the device further comprises one or more filaments arranged in the die. Each filament is arranged for forming one internal coolant channel in the extruded material. This technique is known and different ways of attaching the filaments are known.

In one embodiment of the invention each filament is arranged to overlap the projection during extrusion, i.e. the filaments have a length that exceeds the distance between the attachment point upstream from the die and the tip of the projection such that when the sleeve is at least partly filled up with extruded material and the filaments extend in the extruded material in a twisted manner they still overlap the projection. Moreover, the projection may for each filament in an end portion thereof comprise at least one structure for receiving the filament and holding it in place during extrusion. Preferably the structure is a concave structure, by way of example the projection may be chamfered or provided with slits or recesses in the end portion. The structure guides the filaments during extrusion and separates filaments from each other.

In one embodiment of the invention the device further comprises means for cutting off the extruded material at the die. Said means for cutting off the extruded material may comprise a cutting blade or arranged to be inserted between the die and the sleeve.

In one embodiment of the invention said means for cutting off the extruded material comprises that the die and the sleeve are movable relative the other in a transverse direction perpendicular to the extrusion direction. The relative motion will rather shear than cut the extruded material apart. In practice the die is preferably fixed and the sleeve or at least part thereof is movable relative the die, however the invention is not limited to this. The relative motion not only is a convenient way of cutting off the extruded material, it may also be used to place a new sleeve in position for being filled with extruded material to make a new blank.

In one embodiment of the invention the device comprises sleeves or sleeve arrangements arranged side by side. One or more dies are arranged with their respective outlet in position for extruding into a sleeve. When one sleeve has been filled and a blank has been released a new sleeve can be moved into position for receiving extruded material from the die.

In one embodiment of the invention the device comprises a body with one or more longitudinal grooves extending from an end portion of the body and one or more movable sleeve parts for each longitudinal groove. The body is in operation arranged with the end portion of the longitudinal groove facing the die and being parallel with the extrusion direction, and the moveable sleeve parts are arranged on the longitudinal groove such that an end portion of the longitudinal groove and the movable sleeve parts together forms the sleeve when the movable sleeve parts are in a closed position. The movable sleeve parts may be moved away from the body to an open position, by way of example by folding them apart. A plurality of longitudinal grooves may be arranged side by side along a sliding member or around a revolve axis on a cylindrical body to facilitate cutting off of the extruded material and switching from one groove to the other in an efficient manner.

In one embodiment sleeve serves as holding means for holding the end member in position during filling of the sleeve. One advantage with this is that it simplifies the construction and makes it more compact. This can be realized for example by the movable sleeve parts of the above embodiment holding the end member. This will also synchronize the release of the end member and the shank portion. The release can be controlled for example by controlling the pressure within the sleeve.

A method for manufacturing a blank for a round tool in accordance with one embodiment of the invention comprises the steps of:
a) providing a feed material comprising a powder mixture
b) feeding the feed material through a die, thereby forming by extrusion an extruded material with chip flutes defined by an interior flute-forming surface of the die,
c) allowing the extruded material to progress in an extrusion direction into a first end of a sleeve, the sleeve being closed in a second end by an end member comprising a projection for forming a bore in the shank portion that protrudes into the sleeve, and to fill the sleeve, thereby forming the shank portion having a shape defined by an interior shank-forming surface of the sleeve and the end member,
d) releasing the end member to allow the shank portion to move along the extrusion direction together with the end member while continuing feeding the feed material through the die, thereby forming the fluted portion, and
e) cutting off the extruded material at the die to form the blank.

In order to manufacture a tool made of the above mentioned materials the powder mixture comprises powder of materials commonly used for forming round tools for metal cutting by chip forming machining. In addition to the raw materials for forming the constituents of the final product the powder mixture may also comprise other materials that are used commonly used to enable pressing and extrusion.

The steps c) to e) are preferably performed in sequence. The feeding of the feed material is preferably performed continuously and said sequence may be repeated to repeatedly form blanks. The blank is ejected from the device with the end member attached to the shank portion. Hence formation of the next blank is preferably performed with a new end member.

The method may further comprise forming one or more internal coolant channels in the extruded material in accordance with one embodiment of the invention. As known in the art the number of internal coolant channels, the placement and the dimension thereof depend on the design of the round tool to be formed. For example the device may be arranged for providing twisted internal coolant channels following the chip flutes formed. The internal coolant channels can be formed using methods used in the art. Preferably, the internal coolant channels are formed in the extruded material using one filament arranged in the die for each internal coolant channel to be formed.

In one embodiment of the invention the extruded material is cut off by a relative movement of the die and the sleeve in a transverse direction perpendicular to the extrusion direction.

In one embodiment of the invention the method further comprises moving at least part of the sleeve away from the shank portion when releasing the end member. One advantage with this embodiment is that the shank portion formed is released in this operation and the shank portion can easily be pushed away by the progressing extruded material forming the fluted portion.

The blank formed may be subjected to one or more post-treatment steps that together with the method of manufacturing the blank in accordance with the invention provides a method for manufacturing a round tool. The post-treatment comprises at least sintering. It may further comprise drying of the blank prior to sintering. The blank may also be machined prior to, or after, sintering.

In one embodiment of the invention the method for manufacturing a round tool further comprises a finishing operation including at least boring to finish the bore accurately.

Thanks to the manufacturing method and the device of the present invention, where the fluteformation is performed simultaneously with the formation of the internal coolant channels, there is no risk for deformation of the internal coolant channels within the fluted portion and the yield is improved. Moreover the method and the device of the invention enable improved design of a coolant inlet for the coolant channels. Conventionally, two or more coolant channels enter in the shank portion and extend through the round tool following the chip flutes. The coolant channels are usually comparatively narrow and hence the flow resistance is high, the longer coolant channels, the higher flow resistance. Moreover, any deformation of the internal coolant channels in the subsequent formation of fluted portion or shank portion in accordance with prior art will be detrimental to the flow properties. Thanks to the manufacturing method and the device of the present invention the coolant channels in the shank portion will not be deformed and can be designed differently than in the fluted portion, in particular the cross section of the internal coolant channels can be increased in the shank portion.

Another advantage of the method and device of the above embodiments is that there is essentially no material loss in the process.

Yet another advantage is that the extrusion process can be kept running continuously. When one blank has been finished a new sleeve arrangement can be arranged to receive extruded material from the outlet of the die and the method starts a new iteration.

Another advantage with the manufacturing method and device of the present invention is that the length of the fluted portion and the shank portion is easily adjusted. The length of the fluted portion is simply determined by the time allowed for extruding the fluted portion after forming the shank portion. The shape or dimensions of the shank portion is easily adjusted by replacing the sleeve or sleeve arrangement.

Other objects, advantages and novel features of the invention will become apparent from the following detailed description of the invention when considered in conjunction with the accompanying drawings and claims.

### Brief description of drawings

Embodiments of the invention will now be described with reference to the accompanying drawings, wherein:
FIG 1A-D are schematic illustrations of a drill with a central bore in the shank portion of the drill connected to two internal coolant channels in the fluted portion in accordance with one embodiment of the present invention, and
FIG 2 is a schematic illustration of a device for manufacturing a round tool blank in accordance with one embodiment of the invention,
FIG. 3A-B are schematic illustrations of a device for manufacturing a blank for a round tool in accordance with FIG. 1 in accordance with one embodiment of the invention
FIG. 4A-B are schematic illustrations of a device for manufacturing a blank for a round tool in accordance with FIG. 1 in accordance with one embodiment of the invention, and
FIG. 5A-C are schematic illustrations of manufacturing steps in a method of manufacturing a blank for a round tool in accordance with FIG. 1 in accordance with one embodiment of the present invention.

### Detailed description

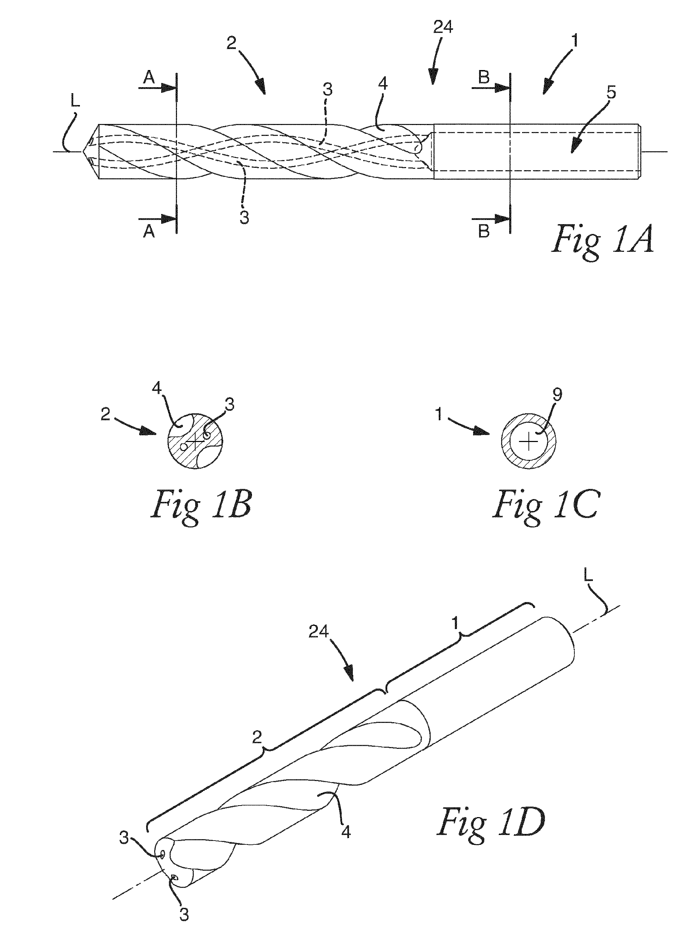

FIG. 1A-D schematically disclose a drill 24 comprising a shank portion 1 and a fluted portion 2 integral with the shank portion 1. The fluted portion 2 refers to the portion of the drill 24 having chip flutes formed in a circumferential surface thereof. This particular drill 24 is only one example of a round tool in accordance with the invention, and the invention also relates to other drill geometries as well as end mills and other round tools for chip forming machining by metal cutting. Hence the term drill 24 is used interchangeably with the term round tool 24 in the following. One or more interior coolant channels 3 may be provided within the drill 24. By way of example, best shown in the cross sectional view A-A of FIG. 1B, the drill comprises two internal coolant channels 3 following the helical chip flutes 4 of the drill in a twisted manner, however, the placement, the dimensions and the number of internal coolant channels 3 are dependent on the design of the drill. Referring to FIG. 1A and the cross section B-B of FIG. 1C, the drill further comprises a bore 5 extending into the shank portion 1 coaxially with a longitudinal centre axis L of the drill 24. The bore 5 extends at least partly into the shank portion 1. It may extend through the whole shank portion 1 and partly into the fluted portion 2. The internal coolant channels 3 are connected to the bore 5. Then the bore 5 provides a common inlet for the internal coolant channels 3. A total cross-sectional area of the internal coolant channels 3 is smaller than a cross-sectional area of the bore 5 connected to the internal coolant channels 3.

Since the manufacturing in accordance with the invention enables a blank with a shape very close to the final round tool shape the above description of the design of the round tool is valid for the blank as well.

In the following embodiments of the method and the device for manufacturing a blank for a round tool are described for a round tool comprising internal coolant channels 3. However, it should be appreciated that it is also possible to manufacture a blank without internal coolant channels 3 as well.

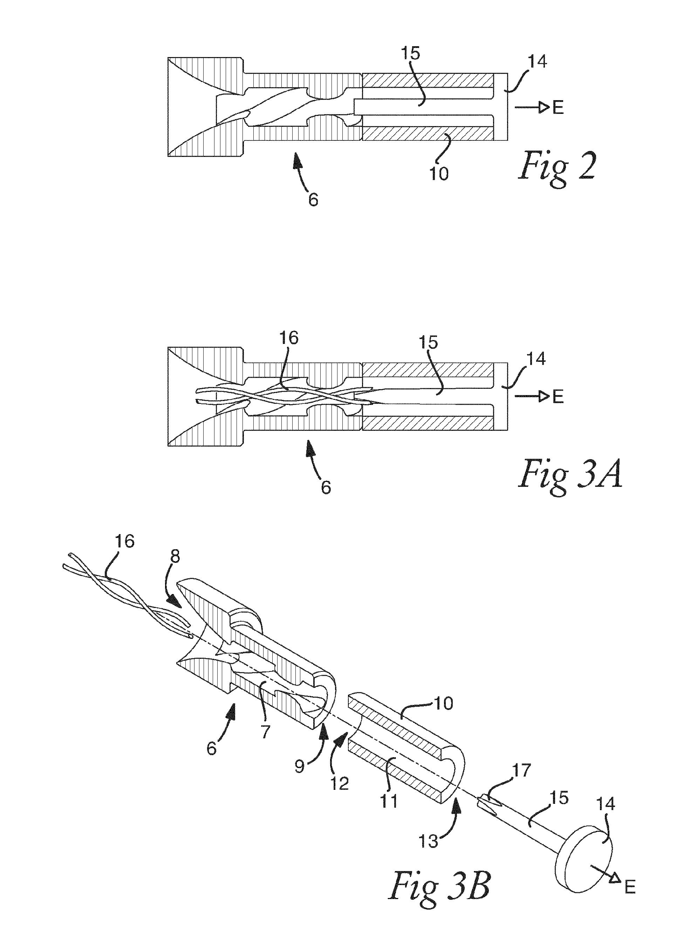

FIG. 2 schematically illustrates a device for manufacturing a blank for a round tool, the blank comprising a shank portion 1 and a fluted portion 2, in accordance with one embodiment of the invention. The device comprises
- a die 6 for extrusion comprising an interior flute-forming surface 7 between an inlet 8 and an outlet 9 of the die 6,
- a sleeve 10 comprising an interior shank-forming surface 11 between a first end 12 and a second end 13 of the sleeve 10, and
- an end member 14 for closing the sleeve 10 in the second end 13.

By way of example the flute-forming surface 7 of the die 6 in FIG. 3 have a cross-section of a drill with chip flutes and the flute-forming surface 7 is twisted along an extrusion direction E. Thus, the flute-forming surface 7 has an inverted shape of at least part of the fluted portion 2 of the blank.

The die 6 is adapted to be connected to feeding means for feeding feed material into the inlet of the die 6. By way of example, said feeding means may be an extrusion gun. The die 6 may be a separate part that is connected with to the extrusion gun by fastening means or integral with the extrusion gun. The details of this connection and the feeding means are not shown since these are known.

The sleeve 10 is an open structure comprising an opening in each of the first end 12 and the second end 13. The sleeve 10 is adapted to be connected to the die 6 with the first end 12 facing the outlet 9 of the die 6 for receiving extruded material 22 from the die 6. A centre axis of the sleeve 10 is aligned with a centre axis of the die 6. The dimensions of the sleeve 10 are determined by the dimensions of the shank portion 1 to be formed. In general the diameter of the sleeve 10 and length of the sleeve 10 are approximately equal to the diameter and the length of the shank portion 1, respectively.

The end member 14 comprises a projection 15 for forming a bore 5 in the shank portion 1 arranged to protrude into the sleeve 10 when in the closed position. The end member 14 is arranged to be movable in the extrusion direction, away from the sleeve 10 into a released position, when released from the sleeve. In operation, the motion of the end member 14 will be restricted to this direction due to extruded material enclosing the bore 5 the force from extruded material from the die pushing the end member 14 forward, as explained in the following. However, the end member 14 may be a separate part and not fixedly connected to the sleeve 10 or other parts of the device. Hence the end member 14 may be replaceable.

Referring to FIG. 3A-B, the device of FIG. 2 further comprises one or more filaments 16 arranged in the die 6, wherein each filament is arranged for forming an internal coolant channel 3 in the extruded material in a twisted manner. One end of the filament 16 is attached upstream from the inlet 8 of the die 6 and the other end is loose. Details of the attachment of the filament 16 are not shown since it is known in the field. The filaments 16 extend into the die 6 and at least partly along the die 6.

In accordance with one embodiment of the invention the filaments 16 are arranged to overlap the projection 15 during extrusion and to extend into the sleeve 10. The projection 15 for each filament 16 in an end portion thereof comprises at least one structure 17 for receiving the filament 16 and holding it in place during extrusion. As best shown in FIG. 3B, the structure may be a concave structure, by way of example the projection is chamfered in the end portion. The projection 15 has a length that makes it extend into the die 6 when in closed position. Hence, since the projection overlaps the flute-forming surface 7 of the die 6 the bore 5 formed in the blank will extend into the fluted portion 2.

Preferably at least one of the sleeve 10 and the die 6 is movable relative the other in a transverse direction T to the extrusion direction E. As explained in the following the relative movement may be used to cut off extruded material at the outlet of the die 6.

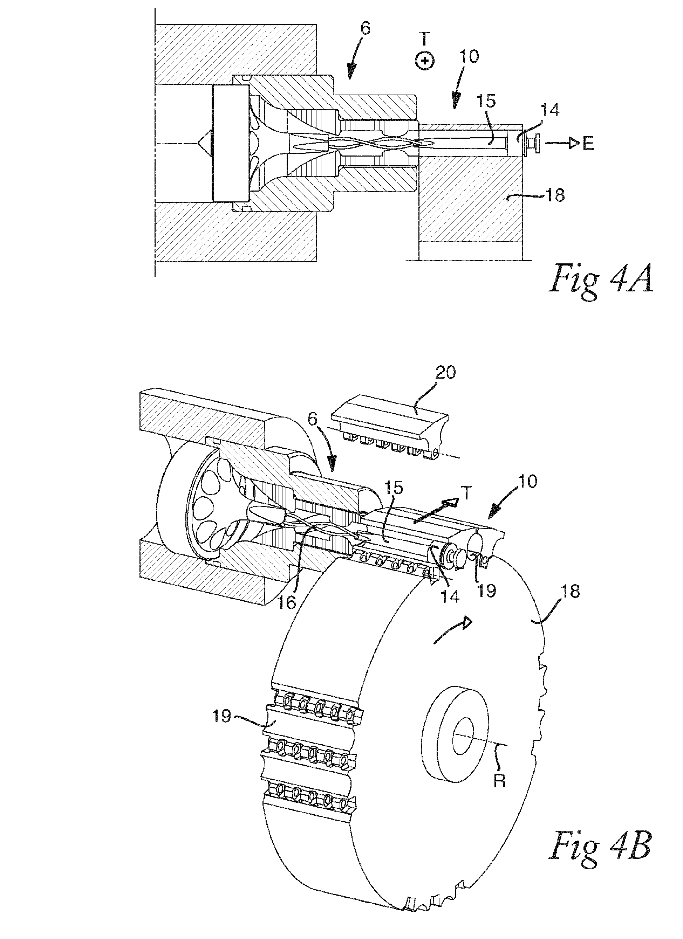

FIG. 4A-B disclose a device comprising a sleeve arrangement in accordance with one embodiment of the invention comprising a body 18 with at least one longitudinal groove 19 extending from an end portion of the body 18. The longitudinal groove 19 forms one part of the sleeve 10. The body 18 is arranged with the end portion of the longitudinal groove 19 facing the die 6 and being parallel with the extrusion direction E. As shown in FIG. 4B the body 18 may be cylindrical with a plurality of longitudinal grooves 19 arranged side by side around a revolve axis R and arranged to one by one be arranged in line with the die, however not limited to this. For example the longitudinal grooves 19 may be arranged side by side in a plane. By movement of the body 18 relative the die 6 in the transverse direction T adjacent longitudinal grooves 19 can be positioned in front of the die 6. The sleeve arrangement in FIG. 4B further comprises two movable sleeve parts 20 arranged on the longitudinal groove 19 and together with the longitudinal groove 19 forming the sleeve 10 of the device. In operation the sleeve parts 20 are closed during filling of the sleeve 10 to receive extruded material and to form the shank portion 1 and when the sleeve 10 is filled the parts 20 are moved away from the shank portion 1 to open the sleeve 10. Holding means for holding the end member 14 are accomplished by the sleeve 10 itself, the movable sleeve parts 20 hold the end member 14 in a closed position, however not limited to this. When the movable sleeve parts 20 are moved away the end member is released.

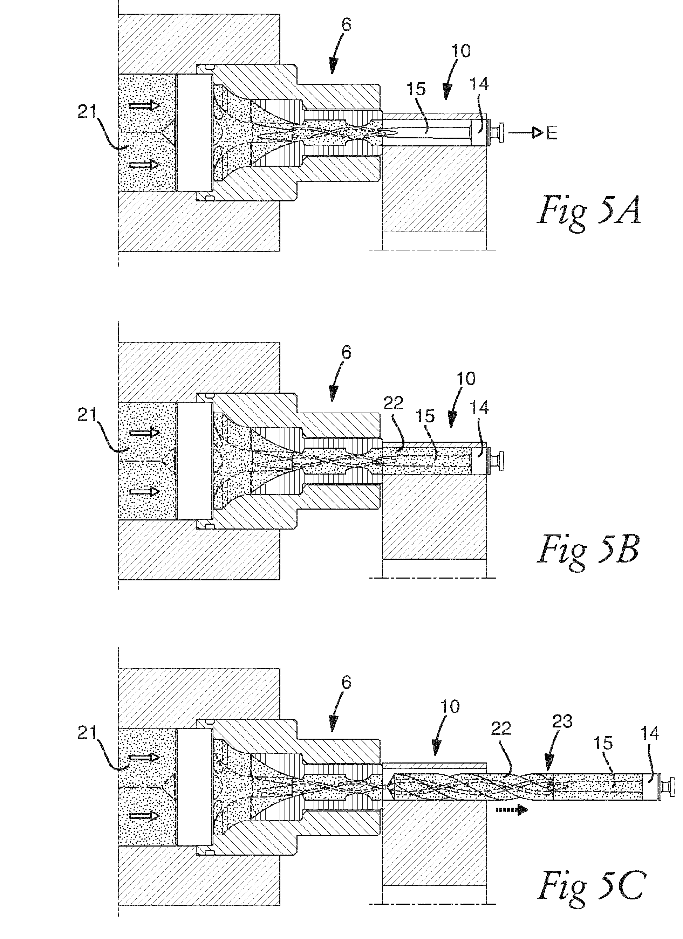

A method of manufacturing a blank for a round tool for chip forming machining in accordance with the invention involves an extrusion process. FIG. 5A-C schematically illustrate one embodiment of a method for manufacturing a blank 23 for a round tool. This embodiment is described using a device in accordance with the device disclosed in FIG. 4A-B, however this description applies to devices in accordance with other embodiments of the invention as well.

A feed material 21 is provided and is fed through a die 6. By way of example the feed material 21 comprises a powder mixture comprising cemented carbide for manufacturing a blank for a cemented carbide tool. As for this material, the powder mixture composition for round tools made of other materials is different and well known.

To start the manufacturing of the blank the feed material 21 is fed into the inlet 8 of the die 6 and through the die 6 by means for feeding the feed material 21. Said means for feeding the feed material may comprise one or more of means for compacting, rotating and heating the feed material 21, all well known. This extrusion of the feed material 21 through the die 6 forms an extruded material 22 with chip flutes 4 defined by an interior flute-forming surface 7 of the die 6 at the outlet 9 of the die 6. Further, optionally available in the device, internal coolant channels 3 are formed by filaments 16 arranged in the die 6. Due to rotation of the feed material the filaments 16 are twisted and hence the internal coolant channels 3 will be twisted in the extruded material 22 that leaves the die 6.

The extruded material 22 is allowed to progress in the extrusion direction into the first end 12 of the sleeve 10 to meet the projection 15 of the end member 14 that closes the sleeve in the second end 13 of the sleeve 10. As the extrusion is continued the sleeve 10 fills up. The internal coolant channels 3 formed in the above extrusion process coincides with the projection 15. As illustrated in FIG. 5 this may be accomplished by having filaments 16 with a length that overlaps the projection 15 during extrusion. The overlapping filaments 16 may be hold in place by slits in the end portion of the projection 15. Closer to the second end 13 of the sleeve 10 the extruded material is deformed and the internal coolant channels will be deformed and as the pressure builds up in the sleeve 10 the internal coolant channels will at least partly be closed. The end member is kept in the closed position until the sleeve 10 is substantially filled up. This can be controlled e.g. by measuring the pressure in the sleeve 10. The sleeve 10 may be provided with openings to help in controlling the deformation and pressure within the sleeve 10 (not shown).

When filled up the end member 14 is released to allow the shank portion 1 formed by the sleeve 10 to move along the extrusion direction E together with the end member 14 while continuing feeding feed material 21 through the die 6, thereby forming the fluted portion 2 with internal coolant channels.

Finally, when the length of the fluted portion 2 has reached the desired length the extruded material is cut off at the die 6 to create the blank. After being cut off the blank is attached to the end member, which can be used for handling of the blank. The cutting off is accomplished by relative movement between the die 6 and the sleeve 10 in a transverse direction T being perpendicular to the extrusion direction E, or at least part of the sleeve 10 or sleeve arrangement, i.e. using the device of FIG. 4B the body 18 is rotated around a revolve axis R. When having sleeves 10 arranged side by side as in FIG. 4 the outlet 8 of the die 6 is aligned with an adjacent sleeve 10, preferably without stopping the extrusion process. This adjacent sleeve 10 is closed by a new end member and the above process is repeated.

To form a round tool the end member is removed from the blank and the blank is subjected to post-treatment including at least sintering. The post-treatment may also include drying and machining prior to sintering.

Although the above embodiments are shown with cylindrical shank portions it should be appreciated that the invention is not limited to this. By way of example the shank portion have a square cross section or other geometry adapted to fit into a certain tool holder.

While the invention has been described in connection with various exemplary embodiments, it is to be understood that the invention is not to be limited to the disclosed exemplary embodiments, on the contrary, it is intended to cover various modifications and equivalent arrangements within the appended claims.

## Claims

1. A method for manufacturing a blank (23) for a round tool, the blank (23) comprising a shank portion (1) and a fluted portion (2), wherein the method comprises the steps of:
- providing a feed material (21),
- feeding the feed material (21) through a die (6), thereby forming by extrusion an extruded material (22) with chip flutes (4) defined by an interior flute-forming surface (7) of the die (6),
- allowing the extruded material (22) to progress in an extrusion direction (E) into a first end (12) of a sleeve (10), the sleeve being closed in a second end (13) by an end member (14) comprising a projection (15) protruding into the sleeve (10), and to fill the sleeve (10), thereby forming the shank portion (1) having a shape defined by an interior shank-forming surface (11) of the sleeve (10) and the end member (14),
- releasing the end member (14) to allow the shank portion (1) to move along the extrusion direction (E) together with the end member (14) while continuing feeding the feed material (21) through the die (6), thereby forming the fluted portion (2), and
- cutting off the extruded material (22) at the die (6) to form the blank.

2. The method of claim 1, further comprising forming one or more internal coolant channels (3) in the extruded material (22) using one filament (16) arranged in the die (6) for each internal coolant channel (3).

3. The method of claim 1 or 2, wherein the extruded material is cut off by a relative movement of the die (6) and the sleeve (10) in a transverse direction (T) perpendicular to the extrusion direction (E).

4. The method of any of claims 1-3, further comprising moving at least part of the sleeve (10) away from the shank portion (1) when releasing the end member (14).

5. A method of manufacturing a round tool comprising the steps of the method of manufacturing a blank (23) of any of the preceding claims, and further comprising sintering the blank (23).

6. A device for manufacturing a blank (23) for a round tool, the blank (23) comprising a shank portion (1) and a fluted portion (2), wherein the device comprises a die (6) for extrusion comprising an interior flute-forming surface (7) between an inlet (8) and an outlet (9) of the die (6), a sleeve (10) comprising an interior shank-forming surface (11) between a first end (12) and a second end (13) of the sleeve (10), and an end member (14) having a closed position for closing the sleeve (10) in the second end (13) of the sleeve (10) and having a released position where the end member is separated from the sleeve (10), wherein the die (6) is adapted to be connected to feeding means for feeding feed material (21) into the inlet of the die (6), the sleeve (10) is adapted to be connected to the die (6) with the first end (12) facing the outlet (9) of the die (6) and being aligned with an extrusion direction (E) of the die (6), and the device is adapted to hold the end member (14) in the closed position, **characterised in that** the end member (14) comprises a projection (15) arranged to protrude into the sleeve (10) when the sleeve (10) is closed by the end member (14), and the end member is arranged to be movable in the extrusion direction (E), away from the sleeve (10), when released from the closed position.

7. The device of claim 6, further comprising one or more filaments (16) arranged in the die (6), wherein each filament is arranged for forming an internal coolant channel (3) in extruded material (22) formed by the die (6).

8. The device of claim 7, wherein each filament (16) is arranged to overlap the projection (15) in the closed position when the extruded material (22) fills up the sleeve (10), and the projection (15) for each filament (16) in an end portion thereof comprises at least one structure (17) for receiving the filament (16).

9. The device of any of claims 6-8, wherein at least one of the die (6) and the sleeve (10) are movable relative the other in a transverse direction (T) perpendicular to the extrusion direction (E).

10. The device of any of claim 6-9, further comprising a body (18) with at least one longitudinal groove (19) extending from an end portion of the body (18) and at least one movable sleeve part (20) for each longitudinal groove (19), wherein the body (18) is arranged with the end portion of the longitudinal groove (19) facing the die (6) and being parallel with the extrusion direction (E) and the moveable sleeve part (20) is arranged on the longitudinal groove (19) and being movable away from the body (18) such that an end portion of the longitudinal groove (19) and the movable sleeve part (20) together forms the sleeve (10) when the movable sleeve part (20) is in a closed position and the moveable sleeve part (20) is moved away from the body (18) when in an open position.

11. The device of claim 10, wherein the movable sleeve part (20) is arranged to hold the end member (14) in the closed position and to release the end member (14) when moved away from the body (18).

12. The device of claim 10 or 11, wherein the body (18) is cylindrical with a plurality of longitudinal grooves arranged side by side around a revolve axis (R) and arranged to one by one be arranged in line with the die.

13. A blank (23) for a round tool comprising a shank portion (1) and a fluted portion (2) **characterised in that** the blank (23) comprises a bore (5) extending into the shank portion (1) coaxially with a longitudinal centre axis (L) of the blank (23).

14. The blank of claim 13, further comprising one or more internal coolant channels (3) extending at least in the fluted portion (2) along the longitudinal centre axis (L) of the blank (23), wherein the internal coolant channels are connected with the bore (5).

15. The blank of claim 14, wherein a total cross-sectional area of the internal coolant channels (3) is smaller than a cross-sectional area of the bore (5).

16. A round tool formed by sintering the blank of any of claims 13-15.
